# EUROPEAN PATENT APPLICATION

(11) **EP 4 203 487 A1**
(43) Date of publication of application: **28.06.2023**
(21) Application number: 22216439.4
(22) Date of filing: 23.12.2022
(51) Int. Cl.: H04N 21/44, H04N 19/436

(54) **METHOD AND APPARATUS FOR PROCESSING MULTIMEDIA RESOURCE**

(30) Priority: 27.12.2021 CN 202111617830
(71) Applicant: Apollo Intelligent Connectivity (Beijing) Technology Co., Ltd., Beijing 100176 (CN)
(72) Inventor: ZHOU, Wenhuan, Beijing, 100176 (CN)
(74) Representative: Isarpatent

(57) **Abstract**

A computer-implemented method and an apparatus for processing a multimedia resource, and a storage medium are provided. The method includes: sequentially performing decoding processing on a plurality of pictures in a multimedia resource, for each of the plurality of pictures to be decoded, the decoding processing includes: decoding the picture to be decoded to generate a picture to be rendered; placing the picture to be rendered to a rear of a buffer queue; performing rendering processing on one or more pictures to be rendered in the buffer queue, the rendering processing includes: taking out a picture to be rendered at a front of the buffer queue; rendering the picture to be rendered; and the sequentially performing decoding processing on a plurality of pictures to be decoded in the multimedia resource and the performing rendering processing on one or more pictures to be rendered in the buffer queue are executed concurrently.

## Description

### TECHNICAL FIELD

The present disclosure relates to the technical fields of Internet of vehicles and intelligent cockpits, in particular to the technical field of multimedia playback, and specifically to a computer-implemented method and an apparatus for processing a multimedia resource, a computer-readable storage medium, and a computer program product.

### BACKGROUND ART

A multimedia resource such as a frame animation usually includes a plurality of frames of pictures, and the multimedia resource can be played by continuously playing the plurality of frames of pictures.

The techniques described in this section are not necessarily techniques that have been previously conceived or employed. It should not be assumed that any of the techniques described in this section is considered to be the prior art just because they are included in this section, unless otherwise indicated expressly. Similarly, the problem mentioned in this section should not be considered to be universally recognized in any prior art, unless otherwise indicated expressly.

### SUMMARY OF THE INVENTION

The present disclosure provides a computer-implemented method and an apparatus for processing a multimedia resource, a computer-readable storage medium, and a computer program product.

According to an aspect of the present disclosure, there is provided a computer-implemented method for processing a multimedia resource, the method including: performing decoding processing on a plurality of pictures to be decoded in a multimedia resource, where for each of the plurality of pictures to be decoded, the decoding processing includes: decoding the picture to be decoded to generate a picture to be rendered; and placing the picture to be rendered to a rear of a buffer queue; and performing rendering processing on one or more pictures to be rendered in the buffer queue, where the rendering processing includes: taking out a picture to be rendered at a front of the buffer queue; and rendering the picture to be rendered; where the performing decoding processing on a plurality of pictures to be decoded in the multimedia resource and the performing rendering processing on one or more pictures to be rendered in the buffer queue are executed concurrently.

According to an aspect of the present disclosure, there is provided an apparatus for processing a multimedia resource, the apparatus including: a decoding module configured to perform decoding processing on a plurality of pictures to be decoded in a multimedia resource, where for each of the plurality of pictures to be decoded, the decoding processing includes: decoding the picture to be decoded to generate a picture to be rendered; and placing the picture to be rendered to a rear of a buffer queue; and a rendering module configured to perform rendering processing on one or more pictures to be rendered in the buffer queue, where the rendering processing includes: taking out a picture to be rendered at a front of the buffer queue; and rendering the picture to be rendered; where the performing decoding processing on a plurality of pictures to be decoded in the multimedia resource and the performing rendering processing on one or more pictures to be rendered in the buffer queue are executed concurrently.

According to an aspect of the present disclosure, there is provided a non-transitory computer-readable storage medium storing computer instructions, where the computer instructions are used to cause a computer to perform the method as described above.

According to still yet another aspect of the present disclosure, there is provided a computer program product, including a computer program, where when the computer program is executed by a processor, the method as described above is implemented.

It should be understood that the content described in this section is not intended to identify critical or important features of the embodiments of the present disclosure, and is not used to limit the scope of the present disclosure either. Other features of the present disclosure will be easily understood through the following description.

### BRIEF DESCRIPTION OF THE DRAWINGS

The drawings exemplarily show embodiments and form a part of the specification, and are used to explain example implementations of the embodiments together with a written description of the specification. The embodiments shown are merely for illustrative purposes and do not limit the scope of the claims. Throughout the drawings, identical reference signs denote similar but not necessarily identical elements.
FIG. 1 is a schematic diagram of an example system in which various methods described herein can be implemented according to an embodiment of the present disclosure;
FIG. 2 is a flowchart of a method for processing a multimedia resource according to some embodiments of the present disclosure;
FIG. 3 is a structural block diagram of a method for processing a multimedia resource according to an embodiment of the present disclosure;
FIG. 4 is a flowchart of a method for processing a multimedia resource according to an embodiment of the present disclosure;
FIG. 5 is a flowchart of rendering processing according to an embodiment of the present disclosure;
FIG. 6 is a flowchart of decoding processing according to an embodiment of the present disclosure;
FIG. 7 is a structural block diagram of a method for processing a multimedia resource according to an embodiment of the present disclosure;
FIG. 8 is a flowchart of decoding processing according to a further embodiment of the present disclosure;
FIG. 9 is a structural block diagram of an apparatus for processing a multimedia resource according to an embodiment of the present disclosure; and
FIG. 10 is a structural block diagram of an example electronic device that can be used to implement an embodiment of the present disclosure.

### DETAILED DESCRIPTION OF THE EMBODIMENTS

Example embodiments of the present disclosure are described below in conjunction with the accompanying drawings, where various details of the embodiments of the present disclosure are included to facilitate understanding, and should only be considered as example. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from the other. In some examples, the first element and the second element may refer to the same instance of the element, and in some cases, based on contextual descriptions, the first element and the second element may also refer to different instances.

The terms used in the description of the various examples in the present disclosure are merely for the purpose of describing illustrative examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

A multimedia resource such as a frame animation usually includes a plurality of frames of pictures, and the multimedia resource can be played by continuously playing the plurality of frames of pictures.

In the related art, taking the frame animation as an example, to play the frame animation, the plurality of frames of pictures in the frame animation all need to be decoded first, and then each frame of rendered picture is played at a predetermined time interval.

However, the method for processing a frame animation in the related art exerts great pressure on a memory, and the problems of playback freezing and memory overflow easily occur.

The embodiments of the present disclosure provide a method and an apparatus for processing a multimedia resource, an electronic device, a computer-readable storage medium, and a computer program product. Executing decoding processing and rendering processing of a multimedia resource concurrently can, among others, relieve memory pressure, improve playback smoothness of the multimedia resource, and alleviate the problem of memory overflow.

The embodiments of the present disclosure will be described below in detail with reference to the accompanying drawings.

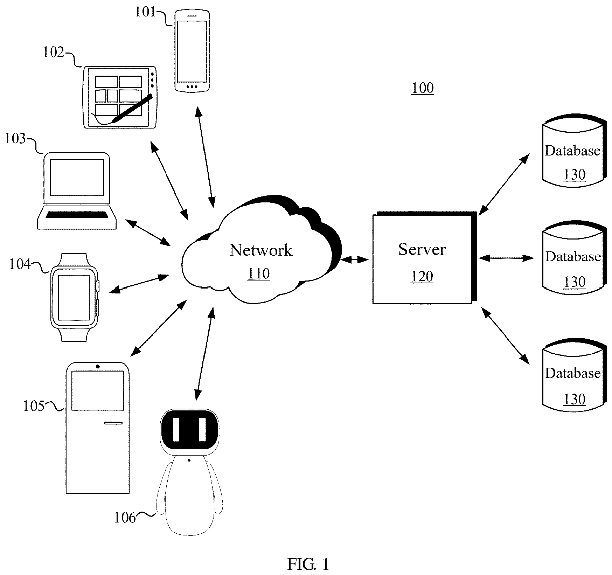

FIG. 1 is a schematic diagram of an example system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more application programs.

In some embodiments of the present disclosure, the server 120 can run one or more services or software applications that enable a method for processing a multimedia resource in the embodiments of the present disclosure to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, thereby utilizing the services provided by these components. It should be understood that various system configurations are possible, which may be different from the system 100. Therefore, FIG. 1 is an example of the system for implementing various methods described herein, and is not intended to be limiting.

The user may use the client device 101, 102, 103, 104, 105, and/or 106 to view the multimedia resource. The client device may provide an interface that enables the user of the client device to interact with the client device. The client device may also output information to the user via the interface. Although FIG. 1 depicts only six types of client devices, those skilled in the art will understand that any number of client devices are possible in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various application programs, such as various Internet-related application programs, communication application programs (e.g., email application programs), and short message service (SMS) application programs, and can use various communication protocols.

The network 110 may be any type of network well known to those skilled in the art, and it may use any one of a plurality of available protocols (including but not limited to TCP/IP, SNA, IPX, etc.) to support data or signal communication. As a mere example, the one or more networks 110 may be a local area network (LAN), an Ethernet-based network, a token ring, a wide area network (WAN), the Internet, a virtual network, a virtual private network (VPN), an intranet, an extranet, a public switched telephone network (PSTN), an infrared network, a wireless network (such as Bluetooth or WIFI), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures relating to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any of the above-mentioned operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more application programs to analyze and merge data feeds and/or event updates received from users of the client device 101, 102, 103, 104, 105, and/or 106. The server 120 may further include one or more application programs to display the data feeds and/or real-time events via one or more display devices of the client device 101, 102, 103, 104, 105, and/or 106.

In some implementations, the server 120 may be a server in a distributed system, e.g., a blockchain network, or a server combined with a distributed system. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store information such as an audio file and a video file. The databases 130 may reside in various locations. For example, a database used by the server 120 may be locally in the server 120, or may be remote from the server 120 and may communicate with the server 120 via a network-based or dedicated connection. The databases 130 may be of different types. In some embodiments, the database used by the server 120 may be, for example, a relational database. One or more of these databases can store, update, and retrieve data from or to the database, in response to a command.

In some embodiments, one or more of the databases 130 may also be used by an application program to store application program data. The database used by the application program may be of different types, for example, may be a key-value repository, an object repository, or a regular repository backed by a file system.

The system 100 of FIG. 1 may be configured and operated in various manners, such that the various methods and apparatuses described according to the present disclosure can be applied.

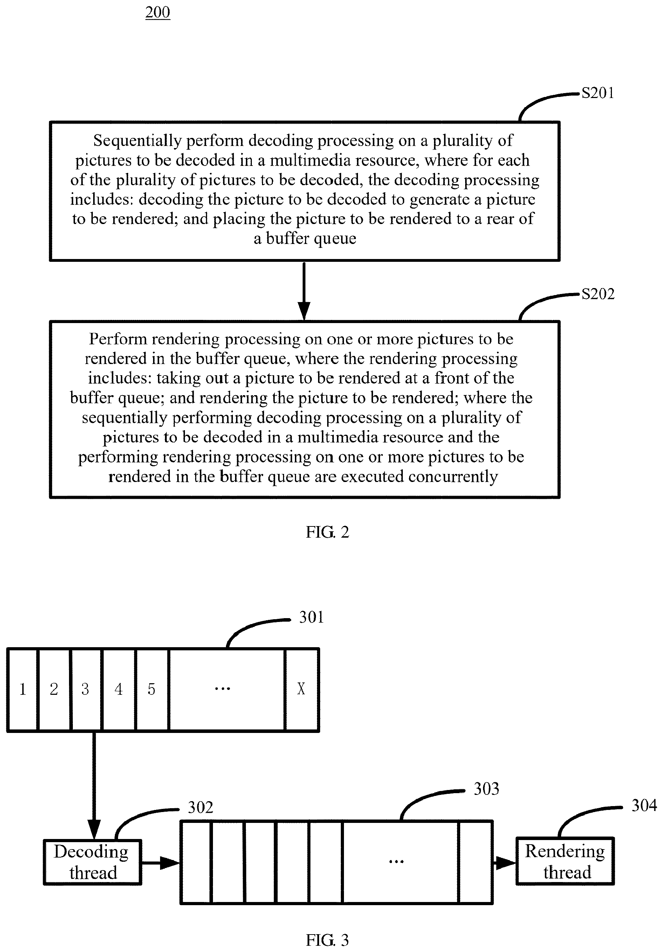

FIG. 2 is a flowchart of a method for processing a multimedia resource according to some embodiments of the present disclosure. FIG. 3 is a structural block diagram of a method for processing a multimedia resource according to an embodiment of the present disclosure. Referring to FIG. 2 and FIG. 3, an embodiment of the present disclosure provides a method 200 for processing a multimedia resource, and the method includes steps S201 and S202.

In step S201, decoding processing is sequentially performed on a plurality of pictures to be decoded in a multimedia resource, where for each of the plurality of pictures to be decoded, the decoding processing includes: decoding the picture to be decoded to generate a picture to be rendered; and placing the picture to be rendered to a rear of a buffer queue.

In step S202, rendering processing is performed on one or more pictures to be rendered in the buffer queue, where the rendering processing includes: taking out a picture to be rendered at a front of the buffer queue; and rendering the picture to be rendered.

The sequentially performing decoding processing on a plurality of pictures to be decoded in the multimedia resource and the performing rendering processing on one or more pictures to be rendered in the buffer queue are executed concurrently.

In some embodiments, the decoding processing and the rendering processing are executed concurrently, where the decoding processing can sequentially decode the plurality of pictures to be decoded in the multimedia resource and sequentially place the pictures to be decoded into the buffer queue, and the rendering processing can sequentially take out the pictures to be rendered from the buffer queue for rendering. Executing the decoding processing and the rendering processing concurrently may reduce a memory space required for multimedia resource processing, relieve memory pressure, and improve playback smoothness.

The multimedia resource may be a resource, such as a dynamic graph, a frame animation, or a video, which is formed by sequentially arranging a plurality of pictures. The pictures to be decoded are pictures constituting the multimedia resource, and a quantity thereof is usually more than one.

In some embodiments, the multimedia resource undergoes two processes before being played, namely the decoding processing and the rendering processing. The pictures to be decoded may be data in a binary format before the decoding processing, bitmaps in a memory can be used for the decoding processing, and the data in the binary format is loaded into the bitmaps for storage, so that the pictures to be rendered are formed. The bitmaps are memory spaces in a picture form, and each bitmap can store one picture. In other words, the pictures to be decoded and the bitmaps are in a one-to-one correspondence. The pictures to be rendered are bitmaps storing decoded data. Certainly, in addition to the binary format, the data may be in another format such as a decimal format or an octal format.

The rendering processing is a process of presenting the pictures to be rendered, that is, a process of re-rendering the data in the bitmaps into visual pictures. For example, the rendering processing may be understood as a process of presenting, on a canvas according to data in the pictures to be rendered, visual pictures corresponding to the data. Rendered pictures (that is, the visual pictures presented on the canvas) may be played at a required playback speed, and thus the entire multimedia resource can be played properly.

In some embodiments, a space in the memory may be used to set the buffer queue in order to implement the concurrent execution of the decoding processing and the rendering processing. The buffer queue may store the pictures to be rendered, so that an execution speed of the decoding processing and the rendering processing is coordinated. The buffer queue may be a first-in-first-out queue, that is, rendering processing will be first performed on a picture to be rendered that enters the queue first.

In step S201, the decoding processing is sequentially performed on the plurality of pictures to be decoded in the multimedia resource, where a sequence of the decoding processing is an arrangement sequence or a playback sequence of the plurality of pictures in the multimedia resource. For each picture to be decoded, the decoding processing includes: decoding the picture to be decoded to generate the picture to be rendered, and then placing the picture to be rendered into the buffer queue. For convenience of description, the following embodiments are described by taking a frame animation as an example.

As shown in FIG. 3, a frame animation 301 has X sequentially arranged pictures to be decoded, and a reference number of a picture to be decoded indicates a playback sequence of the picture to be decoded in the frame animation 301. The decoding processing may be executed by means of a decoding thread 302. The decoding thread 302 may perform the decoding processing on the number 1 picture to be decoded in the frame animation 301, and place a decoded picture to be rendered to a rear of a buffer queue 303, thereby completing the decoding processing on the number 1 picture to be decoded; and then the decoding thread 302 may perform the decoding processing on the number 2 picture to be decoded in the frame animation 301, ..., until the last number X picture to be decoded in the frame animation 301 is processed.

In step S202, the rendering processing is performed on the one or more pictures to be rendered in the buffer queue, that is, the pictures to be rendered in the buffer queue may be rendered to present the visual pictures. The rendering processing includes: taking out a picture to be rendered at a front of the buffer queue; and rendering the picture to be rendered, so as to sequentially implement the rendering processing on at least one picture to be rendered in the buffer queue.

As shown in FIG. 3, the rendering processing may be executed by means of a rendering thread 304. The rendering thread 304 may sequentially perform the rendering processing on the pictures to be rendered in the buffer queue 303 according to a placement sequence thereof. It can be understood that since the decoding thread 302 places a decoded picture to be rendered to the rear of the buffer queue, the rendering thread 304 may take out the picture to be rendered for rendering from the front of the buffer queue in each rendering, that is, a picture to be rendered that enters the buffer queue 303 first will be rendered first, and the frame animation 301 can be rendered by circularly performing the rendering processing on a picture to be rendered at the front of the buffer queue 303.

In the rendering processing, a picture at the front of the buffer queue 303 is taken out from the buffer queue for rendering, and therefore, after each rendering process, the picture to be rendered at the front of the buffer queue 303 changes. By sequentially rendering the picture to be rendered at the front of the buffer queue, the pictures to be rendered may be sequentially rendered according to the playback sequence of the frame animation 301.

It can be understood that the front and the rear only represent two opposite ends of the buffer queue, and do not represent an actual front-rear orientation. For example, in FIG. 3, from right to left, the buffer queue 303 is rear-in and front-out, while from left to right, the buffer queue 303 is front-in and rear-out.

In addition, because a size of each picture in the multimedia resource may be different, a speed of decoding and rendering may be different, and the quantity of the pictures to be rendered in the buffer queue is not fixed, and may change with the speed of decoding and rendering.

In this embodiment, the rendering processing and the decoding processing may be executed concurrently by different threads, and may be independently executed, so that only a few pictures need to be stored in the buffer queue, and there is no need to request a memory space for each picture in the multimedia resource. Compared with a processing method in the related art, less memory space is occupied, and rendering is performed not necessarily after all the pictures are decoded, which may improve a processing speed of the multimedia resource, alleviate the problem of memory overflow, and improve playback smoothness.

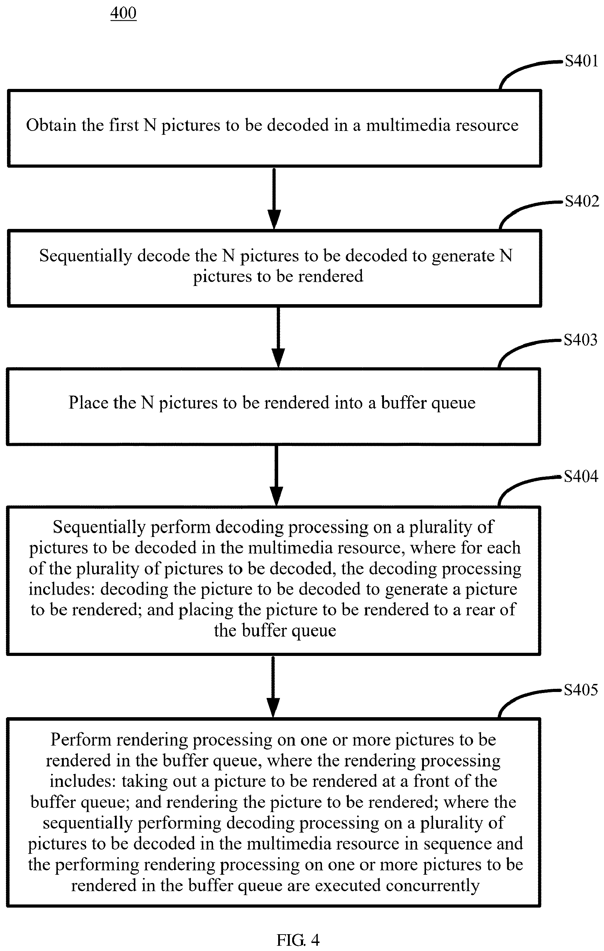

FIG. 4 is a flowchart of a method for processing a multimedia resource according to an embodiment of the present disclosure. Referring to FIG. 4, in some embodiments, a method 400 for processing a multimedia resource further includes the following steps S401 to S405.

In step S401, a first N pictures to be decoded in the multimedia resource are obtained.

In step S402, the N pictures to be decoded are sequentially decoded to generate N pictures to be rendered.

In step S403, the N pictures to be rendered are placed into a buffer queue.

In step S404, decoding processing is sequentially performed on a plurality of pictures to be decoded in the multimedia resource, where for each of the plurality of pictures to be decoded, the decoding processing includes: decoding the picture to be decoded to generate a picture to be rendered; and placing the picture to be rendered to a rear of a buffer queue.

In step S405, rendering processing is performed on one or more pictures to be rendered in the buffer queue, where the rendering processing includes: taking out a picture to be rendered at a front of the buffer queue; and rendering the picture to be rendered.

The sequentially performing decoding processing on a plurality of pictures to be decoded in the multimedia resource and the performing rendering processing on one or more pictures to be rendered in the buffer queue are executed concurrently.

In step S401, the first N pictures to be decoded may be the first N pictures to be decoded arranged according to a playback sequence in the multimedia resource, where N may be a natural number greater than 0, and N may be less than a quantity of the pictures to be decoded in the multimedia resource. N may be set based on a playback speed required for the multimedia resource and a speed of the decoding processing. For example, when N is equal to 3, the first three pictures to be decoded in the multimedia resource may be obtained in step S401.

In step S402, the N pictures to be decoded may be sequentially decoded, and in step S403, the decoded N pictures to be rendered may be sequentially placed into the buffer queue. It can be understood that, in this embodiment, an order of the steps S401 to S403 is not limited. As an example, the decoding processing may be sequentially performed on each of the N pictures to be decoded. To be specific, after each picture to be decoded is obtained, decoded, and stored after decoding, the above process is repeated for a next picture to be decoded. For example, the N pictures to be decoded may be obtained at the same time, the N pictures to be decoded are decoded N times to obtain the N pictures to be rendered, and then the N pictures to be rendered are sequentially placed into the buffer queue.

In addition, step S404 is similar to step S201 in the above embodiments, except that step S404 is to sequentially perform the decoding processing on the remaining pictures other than the N pictures to be decoded. A decoding process for each picture is the same as that in the above embodiments, and for details, reference may be made to the above embodiments.

Step S405 is the same as the method in step S202, and for details, reference may also be made to the above embodiments.

It can be understood that steps S401 to S403 are steps performed before the rendering processing. To be specific, when an instruction of playing the multimedia resource is received, the N pictures to be decoded may be pre-decoded and placed into the buffer queue, and then steps S404 and S405 are performed concurrently. According to the method, the N pictures to be rendered have been pre-stored in the buffer queue before the rendering processing, and a value of N is reasonably set, such that there is always a picture to be rendered in the buffer queue, and a buffer is provided to coordinate cooperative work between a rendering thread and a decoding thread, thereby avoiding the problem that a rendering speed is faster than the decoding processing, and further avoiding a phenomenon that a playback time is prolonged by a decoding time, so that a multimedia resource can be played at a required playback speed.

In some embodiments, before the obtaining the first N pictures to be rendered in the multimedia resource in step S401, the method further includes: determining the value of N based on the playback speed required for the multimedia resource and the speed of decoding processing.

It can be understood that, before different multimedia resources are processed, a quantity of the pictures to be rendered that have been pre-stored in the buffer queue may be determined first, and different values of N may be set for each multimedia resource, thereby improving universality.

In some embodiments, in the decoding processing, the step of decoding the picture to be decoded to generate the picture to be rendered may include: decoding, in response to determining that the current quantity of the pictures to be rendered in the buffer queue is less than a first threshold, the picture to be decoded to generate the picture to be rendered; and suspending the decoding processing in response to determining that the current quantity of the pictures to be rendered in the buffer queue is greater than or equal to the first threshold.

According to some embodiments, the first threshold may be set for the buffer queue, and in some embodiments, the first threshold may be a maximum quantity of the pictures to be rendered that are placed in the buffer queue. When the multimedia resource is processed, a current quantity of the pictures to be rendered in the buffer queue may be obtained in real time. If the current quantity is less than the first threshold, the buffer queue is not full, and the step of decoding the picture to be decoded to generate the picture to be rendered may be normally performed. If the current quantity is greater than or equal to the first threshold, it indicates that the buffer queue is full, and then the decoding processing may be suspended.

It can be understood that when a processing speed of the decoding thread is relatively fast, the current quantity of the pictures to be rendered in the buffer queue gradually increases, and when the current quantity reaches the first threshold, an occupied memory space can be kept within a specific range by suspending the decoding processing, and therefore, the memory space can be saved.

In addition, when the decoding processing is suspended, if the current quantity obtained in real time is less than the first threshold again, the decoding processing may be restarted.

In some embodiments, in the rendering processing, the step of taking out the picture to be rendered at the front of the buffer queue may include: taking out, in response to determining that the current quantity of the pictures to be rendered in the buffer queue is greater than a second threshold, the picture to be rendered at the front of the buffer queue; and suspending the rendering processing in response to determining that the current quantity of the pictures to be rendered in the buffer queue is less than or equal to the second threshold.

It can be understood that, in some embodiments, the second threshold may be 0. When the multimedia resource is processed, the current quantity of the pictures to be rendered in the buffer queue may be obtained in real time. If the current quantity is greater than the second threshold, the buffer queue is not empty, and the step of taking out the picture to be rendered at the front of the buffer queue may be normally performed. If the current quantity is less than or equal to the second threshold, it indicates that the buffer queue is empty, and then the rendering processing may be suspended. For example, when a processing speed of the rendering thread is too fast, and the buffer queue has been empty, the rendering processing may be suspended, thereby avoiding taking out an empty element from the buffer queue for rendering and affecting a playback effect of the multimedia resource.

In addition, when the rendering processing is suspended, if the current quantity obtained in real time is greater than the second threshold again, the decoding processing may be restarted.

In some embodiments, the buffer queue may be a blocking queue, that is, when the buffer queue is full, the decoding thread may be suspended, thereby saving the memory space, and when the buffer queue is empty, the rendering thread may be suspended, thereby ensuring normal playback of the multimedia resource.

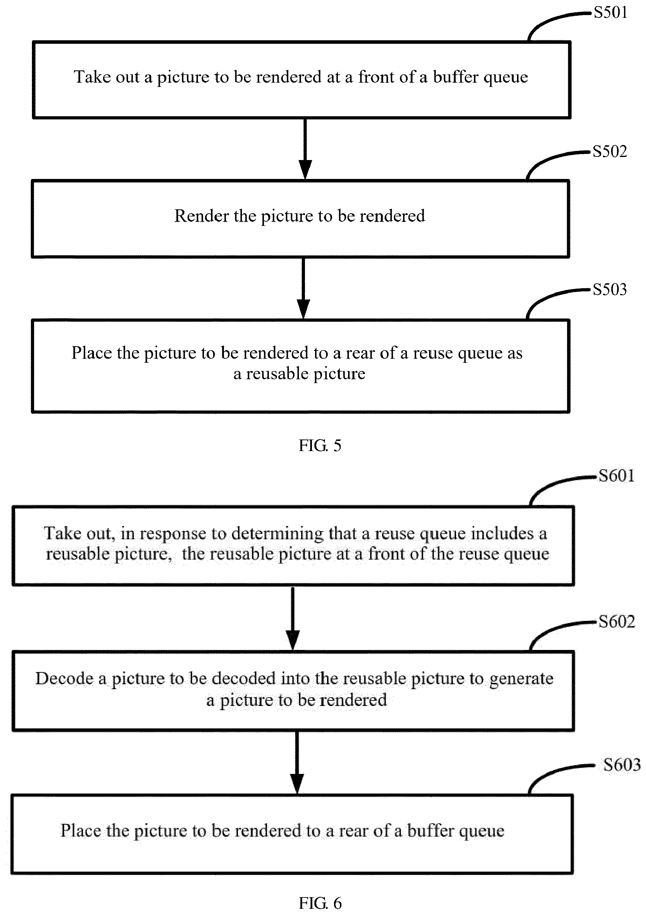

FIG. 5 is a flowchart of rendering processing according to an embodiment of the present disclosure. Referring to FIG. 5, in some embodiments, the rendering processing includes the following steps S501 to S503.

In step S501, a picture to be rendered at a front of a buffer queue is taken out.

In step S502, the picture to be rendered is rendered.

In step S503, the picture to be rendered is placed to a rear of a reuse queue as a reusable picture.

Steps S501 and S502 are the same as the method of the rendering processing in step S202, and for details, reference may be made to the above embodiments.

In step S503, the reuse queue may be a queue for storing the reusable picture. After the picture to be rendered has been rendered, for example, after data in the picture to be rendered is used to present a corresponding visual picture on a canvas, the picture to be rendered may be used as a reusable picture. It can be understood that after a bitmap storing the data has been rendered, the bitmap may not be released into a memory but exists as a reusable picture, the reusable picture may be used by another thread such as a decoding thread, and a processing time can be shortened compared with requesting a bitmap from the memory again.

FIG. 6 is a flowchart of decoding processing according to an embodiment of the present disclosure. Referring to FIG. 6, in some embodiments, the decoding processing may include the following steps S601 to S603.

In step S601, in response to determining that the reuse queue includes the reusable picture, the reusable picture at a front of the reuse queue is taken out.

In step S602, the picture to be decoded is decoded into the reusable picture to generate the picture to be rendered.

In step S603, the picture to be rendered is placed to a rear of a buffer queue.

In step S601, in the decoding processing, it may be first determined whether there is a reusable picture in the reuse queue, and if so, the reusable picture at the front of the reuse queue may be taken out.

In step S602, the picture to be decoded may be decoded into the reusable picture that is taken out, that is, a bitmap of the reusable picture is written with data in the picture to be decoded, so that the bitmap may be circulated between the buffer queue and the reuse queue. Compared with requesting a new bitmap from a memory, a time for the decoding thread may be shortened, and a multimedia resource may be smoothly played by using less memory space.

Step S603 is the same as the method of the decoding processing in step S201, and for details, reference may be made to the above embodiments.

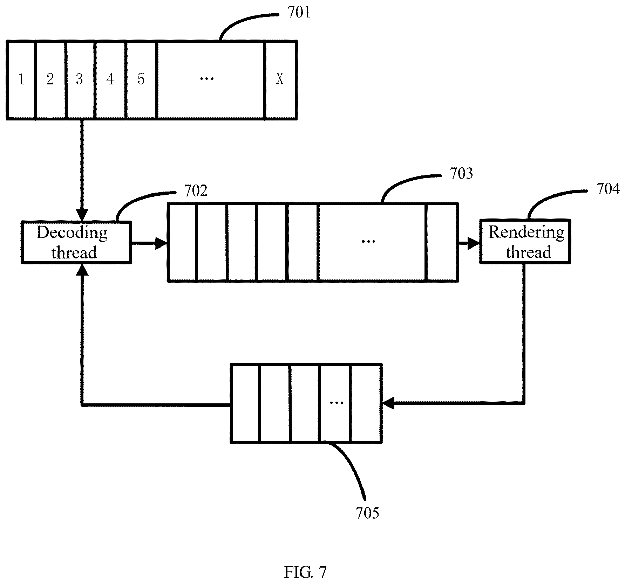

FIG. 7 is a structural block diagram of a method for processing a multimedia resource according to an embodiment of the present disclosure. Referring to FIG. 7, a frame animation 701 has X sequentially arranged pictures to be decoded, and a reference number of a picture to be decoded indicates a playback sequence of the picture to be decoded in the frame animation 701. Decoding processing may be performed by means of a decoding thread 702. The decoding thread 702 may take out a reusable picture at a front of a reuse queue 705, decode a picture to be decoded in the frame animation 701 into the reusable picture to generate a picture to be rendered, and place the picture to be rendered to a rear of a buffer queue 703, thereby completing the decoding processing on one picture to be decoded, and then repeat the decoding processing on a plurality of pictures to be decoded in the frame animation 701.

Rendering processing may be performed by means of a rendering thread 704. The rendering thread 704 may sequentially perform the rendering processing on pictures to be rendered in the buffer queue 703 according to a placement sequence thereof, and place a rendered picture to be rendered to a rear of the reuse queue 705, thereby implementing the circulation of a bitmap.

It can be understood that the reuse queue may be a first-in-first-out queue, and the front and the rear only represent two opposite ends of the reuse queue, and do not represent an actual front-rear orientation. For example, in FIG. 7, from left to right, the reuse queue 705 is rear-in and front-out, while from right to left, the reuse queue 705 is front-in and rear-out. In addition, as a processing speed of the decoding thread 702 and the rendering thread 704 changes, a quantity of reusable pictures in the reuse queue 705 may also change.

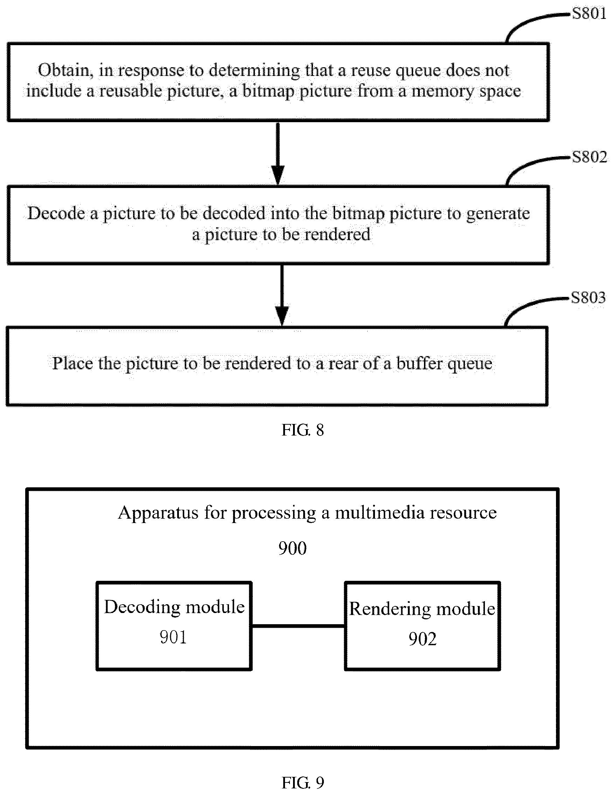

FIG. 8 is a flowchart of decoding processing according to a further embodiment of the present disclosure. Referring to FIG. 8, in some embodiments, the decoding processing may include the following steps S801 to S803.

In steps S801, in response to determining that the reuse queue does not include the reusable picture, a bitmap picture is obtained from a memory space.

In step S802, the picture to be decoded is decoded into the bitmap picture to generate the picture to be rendered.

In step S803, the picture to be rendered is placed to a rear of a buffer queue.

In step S801, in the decoding processing, it may be first determined whether there is the reusable picture in the reuse queue, and if not, a bitmap may be requested from the memory space, and the bitmap may be the bitmap picture.

In step S802, the picture to be decoded may be decoded into the bitmap picture to generate the picture to be rendered. The bitmap of the picture to be rendered may be circulated between the buffer queue and the reuse queue.

Step S803 is the same as the method of the decoding processing in step S201, and for details, reference may be made to the above embodiments.

If a processing speed of a rendering thread is relatively low, the reuse queue may be in an empty state, and then the bitmap picture may be requested from the memory to continue the decoding, so that a waiting time of a decoding thread may be reduced, and a decoding speed may be improved. In addition, before each decoding process, it may be first determined whether there is the reusable picture in the reuse queue, and if so, steps S601 to S603 are performed, and if not, steps S801 to S803 are performed.

It can be understood that a proper value of N may also be determined, so that when the rendering is started, the reuse queue is not empty, thereby improving the decoding speed. That is, steps S801 to S803 may only exist in a process of pre-storing N pictures to be rendered.

In some embodiments, the reuse queue may be a non-blocking queue, that is, the queue does not set a maximum value for accommodating reusable pictures, so that a large number of reusable pictures may be stored, and the decoding speed is further improved. In addition, if the queue is empty, a bitmap picture may be requested from the memory to perform the decoding processing, so that the decoding speed may be improved, a processing speed of a multimedia resource may be improved, and playback smoothness is further improved.

FIG. 9 is a structural block diagram of an apparatus for processing a multimedia resource according to an embodiment of the present disclosure. Referring to FIG. 9, an embodiment of the present disclosure further provides a processing apparatus 900 for a multimedia resource, where the apparatus includes: a decoding module 901 and a rendering module 902.

The decoding module 901 is configured to sequentially perform decoding processing on a plurality of pictures to be decoded in a multimedia resource, where for each of the plurality of pictures to be decoded, the decoding processing includes: decoding the picture to be decoded to generate a picture to be rendered; and placing the picture to be rendered to a rear of a buffer queue.

The rendering module 902 is configured to perform rendering processing on one or more pictures to be rendered in the buffer queue, where the rendering processing includes: taking out a picture to be rendered at a front of the buffer queue; and rendering the picture to be rendered.

The sequentially performing decoding processing on a plurality of pictures to be decoded in the multimedia resource and the performing rendering processing on one or more pictures to be rendered in the buffer queue are executed concurrently.

In this embodiment, the decoding processing and the rendering processing are executed concurrently, where the decoding processing can sequentially decode the plurality of pictures to be decoded in the multimedia resource and sequentially place the pictures to be decoded into the buffer queue, and the rendering processing can sequentially take out the pictures to be rendered from the buffer queue for rendering. Executing the decoding processing and the rendering processing concurrently may reduce a memory space required for multimedia resource processing, relieve memory pressure, and improve playback smoothness.

In some embodiments, the apparatus for processing a multimedia resource further includes: a pre-decoding module configured to obtain a first N pictures to be decoded in the multimedia resource, where N is a positive integer; sequentially decode the N pictures to be decoded to generate N pictures to be rendered; and place the N pictures to be rendered into the buffer queue.

In some embodiments, the apparatus for processing a multimedia resource further includes: a determination module configured to determine a value of N based on a playback speed required for the multimedia resource and a speed of the decoding processing.

In some embodiments, the decoding module is further configured to: decode, in response to determining that a current quantity of the pictures to be rendered in the buffer queue is less than a first threshold, the picture to be decoded to generate the picture to be rendered; and suspend the decoding processing in response to determining that the current quantity of the pictures to be rendered in the buffer queue is greater than or equal to the first threshold.

In some embodiments, the rendering module is further configured to: take out, in response to determining that the current quantity of the pictures to be rendered in the buffer queue is greater than a second threshold, the picture to be rendered at the front of the buffer queue; and suspend the rendering processing in response to determining that the current quantity of the pictures to be rendered in the buffer queue is less than or equal to the second threshold.

In some embodiments, the rendering module is further configured to place the picture to be rendered to a rear of a reuse queue as a reusable picture.

In some embodiments, the decoding module is further configured to: take out, in response to determining that the reuse queue includes the reusable picture, the reusable picture at a front of the reuse queue; and decode the picture to be decoded into the reusable picture to generate the picture to be rendered.

In some embodiments, the decoding module is further configured to: obtain, in response to determining that the reuse queue does not include the reusable picture, a bitmap picture from the memory space; and decode the picture to be decoded into the bitmap picture to generate the picture to be rendered.

According to the embodiments of the present disclosure, there are further provided an electronic device, a readable storage medium, and a computer program product.

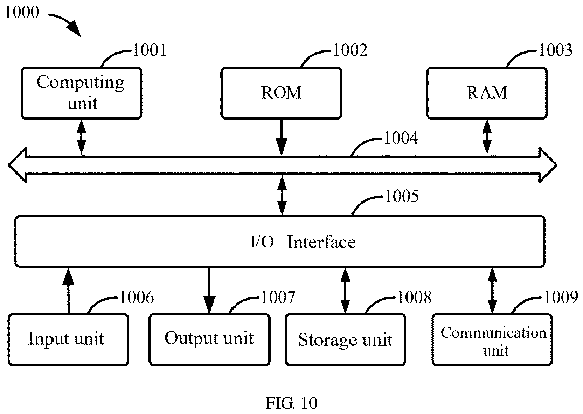

FIG. 10 is a structural block diagram of an example electronic device that can be used to implement an embodiment of the present disclosure. Referring to FIG. 10, a structural block diagram of an electronic device 1000 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 10, the electronic device 1000 includes a computing unit 1001, which may perform various appropriate actions and processing according to a computer program stored in a read-only memory (ROM) 1002 or a computer program loaded from a storage unit 1008 to a random access memory (RAM) 1003. The RAM 1003 may further store various programs and data required for the operation of the electronic device 1000. The computing unit 1001, the ROM 1002, and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, an output unit 1007, the storage unit 1008, and a communication unit 1009. The input unit 1006 may be any type of device capable of entering information to the electronic device 1000. The input unit 1006 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1007 may be any type of device capable of presenting information, and may include, but is not limited to, a display, a speaker, a video/audio output terminal, a vibrator, and/or a printer. The storage unit 1008 may include, but is not limited to, a magnetic disk and an optical disc. The communication unit 1009 allows the electronic device 1000 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth^{™} device, an 802.11 device, a Wi-Fi device, a WiMax device, a cellular communication device, and/or the like.

The computing unit 1001 may be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1001 performs the various methods and processing described above, for example, the method for processing a multimedia resource. For example, in some embodiments, the method for processing a multimedia resource may be implemented as a computer software program, which is tangibly contained in a machine-readable medium, such as the storage unit 1008. In some embodiments, a part or all of the computer program may be loaded and/or installed onto the electronic device 1000 via the ROM 1002 and/or the communication unit 1009. When the computer program is loaded onto the RAM 1003 and executed by the computing unit 1001, one or more steps of the method for processing a multimedia resource described above can be performed. Alternatively, in other embodiments, the computing unit 1001 may be configured, by any other suitable means (for example, by means of firmware), to perform the method for processing a multimedia resource.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed concurrently, in order, or in a different order, provided that the desired result of the technical solutions disclosed in the present disclosure can be achieved, which is not limited herein.

Although the embodiments or examples of the present disclosure have been described with reference to the drawings, it should be appreciated that the methods, systems, and devices described above are merely example embodiments or examples, and the scope of the present invention is not limited by the embodiments or examples, but only defined by the appended authorized claims and equivalent scopes thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A computer-implemented method for processing a multimedia resource, the method comprising:
performing (S201) decoding processing on a plurality of pictures to be decoded in a multimedia resource, wherein for each of the plurality of pictures to be decoded, the decoding processing comprises:
decoding the picture to be decoded to generate a picture to be rendered; and
placing the picture to be rendered to a rear of a buffer queue; and
performing (S202) rendering processing on one or more pictures to be rendered in the buffer queue, wherein the rendering processing comprises:
taking out a picture to be rendered at a front of the buffer queue; and
rendering the picture to be rendered;
wherein the performing decoding processing on the plurality of pictures to be decoded in the multimedia resource and the performing rendering processing on the one or more pictures to be rendered in the buffer queue are executed concurrently.

2. The method according to claim 1, wherein the method further comprises:
before the performing decoding processing on the plurality of pictures to be decoded in the multimedia resource,
obtaining a first N pictures to be decoded in the multimedia resource, wherein N is a positive integer;
sequentially decoding the N pictures to be decoded to generate N pictures to be rendered; and
placing the N pictures to be rendered into the buffer queue, and optionally,
wherein the method further comprises: before the obtaining the first N pictures to be decoded in the multimedia resource,
determining a value of N based on a playback speed required for the multimedia resource and a speed of the decoding processing.

3. The method according to claim 1, wherein in the decoding processing, the decoding the picture to be decoded to generate the picture to be rendered comprises:
decoding, in response to determining that a current quantity of the pictures to be rendered in the buffer queue is less than a first threshold, the picture to be decoded to generate the picture to be rendered; and
suspending the decoding processing in response to determining that the current quantity of the pictures to be rendered in the buffer queue is greater than or equal to the first threshold.

4. The method according to claim 1, wherein in the rendering processing, the taking out the picture to be rendered at the front of the buffer queue comprises:
taking out, in response to determining that a current quantity of the pictures to be rendered in the buffer queue is greater than a second threshold, the picture to be rendered at the front of the buffer queue; and
suspending the rendering processing in response to determining that the current quantity of the pictures to be rendered in the buffer queue is less than or equal to the second threshold.

5. The method according to any one of claims 1 to 4, further comprising: in the rendering processing, after the rendering the picture to be rendered,
placing the picture to be rendered to a rear of a reuse queue as a reusable picture.

6. The method according to claim 5, wherein in the decoding processing, the decoding the picture to be decoded to generate the picture to be rendered comprises:
taking out, in response to determining that the reuse queue comprises the reusable picture, the reusable picture at a front of the reuse queue; and
decoding the picture to be decoded into the reusable picture to generate the picture to be rendered.

7. The method according to claim 5, wherein in the decoding processing, the decoding the picture to be decoded to generate the picture to be rendered comprises:
obtaining, in response to determining that the reuse queue does not comprise the reusable picture, a bitmap picture from a memory space; and
decoding the picture to be decoded into the bitmap picture to generate the picture to be rendered.

8. An apparatus for processing a multimedia resource, comprising:
a decoding module (901) configured to perform decoding processing on a plurality of pictures to be decoded in a multimedia resource, wherein for each of the plurality of pictures to be decoded, the decoding processing comprises: decoding the picture to be decoded to generate a picture to be rendered; and placing the picture to be rendered to a rear of a buffer queue;
a rendering module (902) configured to perform rendering processing on one or more pictures to be rendered in the buffer queue, wherein the rendering processing comprises: taking out a picture to be rendered at a front of the buffer queue; and rendering the picture to be rendered;
wherein the performing decoding processing on the plurality of pictures to be decoded in the multimedia resource and the performing rendering processing on the one or more pictures to be rendered in the buffer queue are executed concurrently.

9. The apparatus according to claim 8, further comprising:
a pre-decoding module configured to obtain a first N pictures to be decoded in the multimedia resource, wherein N is a positive integer; sequentially decode the N pictures to be decoded to generate N pictures to be rendered; and place the N pictures to be rendered into the buffer queue, and optionally,
the apparatus further comprising:
a determination module configured to determine a value of N based on a playback speed required for the multimedia resource and a speed of the decoding processing.

10. The apparatus according to claim 8, wherein the decoding module is further configured to: decode, in response to determining that a current quantity of the pictures to be rendered in the buffer queue is less than a first threshold, the picture to be decoded to generate the picture to be rendered; and suspend the decoding processing in response to determining that the current quantity of the pictures to be rendered in the buffer queue is greater than or equal to the first threshold.

11. The apparatus according to claim 8, wherein the rendering module is further configured to: take out, in response to determining that a current quantity of the pictures to be rendered in the buffer queue is greater than a second threshold, the picture to be rendered at the front of the buffer queue; and suspend the rendering processing in response to determining that the current quantity of the pictures to be rendered in the buffer queue is less than or equal to the second threshold.

12. The apparatus according to any one of claims 8 to 11, wherein the rendering module is further configured to place the picture to be rendered to a rear of a reuse queue as a reusable picture.

13. The apparatus according to claim 12, wherein the decoding module is further configured to: take out, in response to determining that the reuse queue comprises the reusable picture, the reusable picture at a front of the reuse queue; and decode the picture to be decoded into the reusable picture to generate the picture to be rendered.

14. A non-transitory computer-readable storage medium storing computer instructions, wherein the computer instructions are used to cause a computer to perform the method according to any one of claims 1 to 7.

15. A computer program product, comprising a computer program, wherein when the computer program is executed by a processor, the method according to any one of claims 1 to 7 is implemented.
